# EUROPEAN PATENT APPLICATION

(11) **EP 1 333 649 A1**
(43) Date of publication of application: **06.08.2003**
(21) Application number: 02002280.2
(22) Date of filing: 30.01.2002
(51) Int. Cl.: H04M 1/15, H04M 1/60

(54) **Mobile communication device with a retractable headset kit and automatic call control**

(71) Applicant: Sony International (Europe) GmbH, 10785 Berlin (DE)
(72) Inventor: Takahashi, Tsutomu, 85609 Aschheim-Dornach (DE); Odaka, Kentaro, 85609 Aschheim-Dornach (DE)
(74) Representative: Körber, Martin, Dipl.-Phys.

(57) **Abstract**

A mobile communication device with a headset kit (10) is presented, wherein the headset (12, 13, 18) is an integral part of the mobile communication device or an integral part of an accessory device adapted to transfer signals between the headset (12, 13, 18) and the mobile communication device, and wherein the headset (12, 13, 18) is connected to the encasement (11) of the respective device, whereby a retracting means (15, 16) is provided for actively retracting at least the cord (18) of the headset (12, 13, 18) into the encasement (11). Further, an operating status of the mobile communication device is controlled by the state of retraction of the headset (12, 13, 18).

## Description

The present invention relates to a mobile communication device, in particular to a mobile communication device which is suited for hands-free operations.

For achieving a good acoustic quality for a conversation over a mobile communication device, a user usually has to pay a considerable amount of attention on how to place the mobile device close to his ear. Especially when driving a user is then distracted from the traffic. The use of hands-free kits for the operation of mobile communication devices while driving is now mandatory in many countries.

Beside the risks of using a mobile communication device while driving, a mobile communication device held in close proximity to a user's ear exposes its brain directly to the radio frequency radiation emitted by the mobile device. The use of a headset for communicating with a mobile device reduces this unwelcome exposure to radiation and became therefore very popular.

Headsets are usually available as an accessory for mobile communication devices and have to be plugged into the mobile device manually. But still, a driver receiving a call enroute will have to take out the headset from his pocket, plug it into a small hole of the mobile device and push the reception key. For one, this is very inconvenient for a driver, and often the procedure is not completed before the caller hangs up. On the other hand, a driver is put at a high risk of causing an accident.

JP 10303806 proposes a hand-free device for use in a car which is suited to avoid a distraction of a driver caused by a sudden call tone. The hand-free device comprises a control means for detecting if a car is currently in motion and if so, a control means automatically answers an incoming call with an inquiry from a message transmission means requesting to declare if there is an emergency. In case of an emergency the driver of the car is informed by a notice means. In case of no emergency, a recording means records a message from the caller to prevent the driver from being distracted by a sudden call tone. Although this solution reduces the risk of an accident for a driver of a car, the driver is not able to respond quickly to an incoming call.

It is therefore an object of the present invention to propose a mobile communication device and an accessory device for a mobile communication device which allows a secure hands-free operation of a mobile communication device and a quick response to incoming calls.

This object is achieved by the subject-matter of the independent claims.

In particular, the above object is achieved by a mobile communication device with a headset kit, wherein the headset is an integral part of the mobile communication device or an integral part of an accessory device adapted to transfer signals between the headset and the mobile communication device, and wherein the headset is connected to the encasement of the respective device, whereby a retracting means for actively retracting at least the cord of the headset into the encasement is provided.

Further, the above object is achieved by an accessory device for a mobile communication device with a headset connected to the encasement of the accessory device, and with a signal transmission means for the transfer of signals between the headset and the mobile communication device, whereby a retracting means is provided for actively retracting at least the cord of the headset into the encasement.

The proposed mobile communication device with a retractable headset allows a user to operate it without being disturbed in his concentration on his current activity.

Further advantageous features are claimed in the respective sub-claims.

Advantageously, the retracting means are carried out as a mechanical mechanism or as an electro-mechanical mechanism allowing to automatically retract the cord of a headset.

An operating status of the mobile communication device is further advantageously controlled by the state of the retraction of the headset so that a user can control functions of the mobile communication device in that he simply pulls the headset from the encasement or in that he retracts the headset.

The mobile device preferably answers an incoming call automatically and/or places a call automatically according to a number entered by a user, and/or places a call automatically according to an entry selected by a user from a phone book means on the mobile communication device if the cord of the headset is at least partly pulled from its encasement. In this way, a user has to pay less attention for operating his mobile communication device.

A current call is further advantageously terminated upon the cord of the headset going to be retracted in the encasement or when it is retracted to its limit into the encasement so that the user's attention will not be distracted from his current activity.

According to an advantageous development, electro-acoustic transducers which are accessible by the mobile communication device and which are different from the headset, are utilised by the mobile communication device when the cord of the headset is going to be retracted in the encasement or when it is retracted to its limit into the encasement, and these electro-acoustic transducers are not utilised by the mobile communication device, when the cord of the headset is at least partly pulled from the encasement. This allows an automatic switching between electro-acoustic transducers of the headset and those of the mobile communication device itself or external electro-acoustic transducers like those of a conference telephone facility or an audio system in a car.

Preferably, an accessory device according to the present invention is releasably attachable to the mobile communication device, so that the headset will form one single unit together with the mobile communication device. The signal transmission means for transferring signals between the headset and the mobile communication device are advantageously formed by a plug-in connector and/or a transceiving means for a transmission and a reception of optical or electro-magnetical signals, allowing a secure transfer of audio signals based on a electro-mechanical link or a radio communication link for the accessory device being used in an attached or remote condition to the mobile communication device.

The mobile communication device according to the present invention like for instance a mobile phone can e.g. be used in situations where a hands-free operation of the mobile device is mandatory or recommendable and a quick response to an incoming call is desirable.

In the following description, the present invention is explained in more detail by means of special embodiments and in relation to the enclosed drawings, in which
Fig. 1 shows a retractable headset according to the present invention being realised as an accessory device,
Fig. 2a shows a situation of the headset being pulled from its encasement,
Fig. 2b shows a situation of the headset being retracted in the encasement,
Fig. 3a to Fig. 3d show different flowcharts of the functions of a mobile communication device.

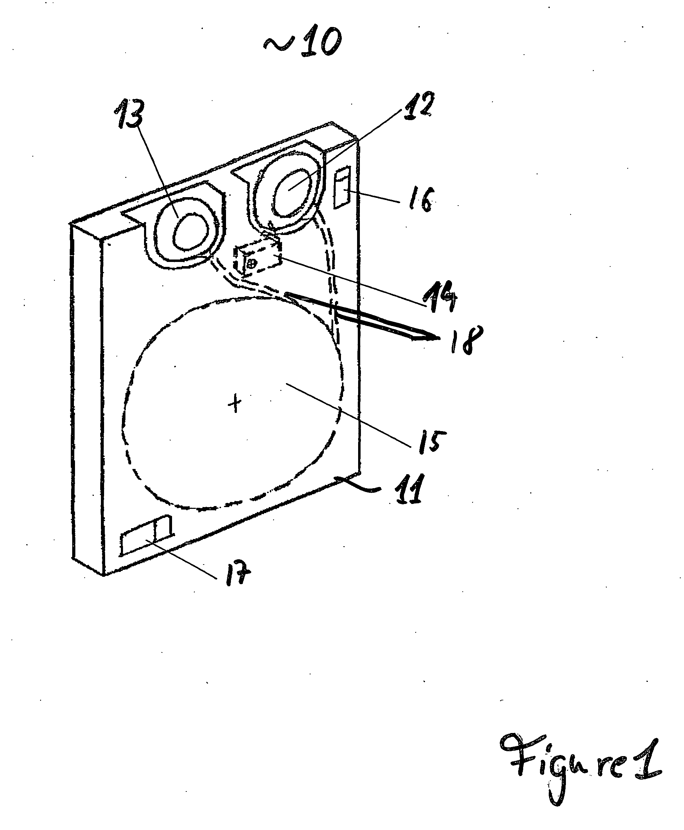

Fig. 1 shows the main components of a retractable headset system 10 according to the present invention. The headset itself comprises at least one speaker in form of an earphone 12, a microphone 13, and at least one cord 18. The cord 18 is fixed the system 10 and thus to the encasement 11. The headset is shown in a state retracted in the encasement 11 of the retractable headset system 10. The encasement 11 is either the casing of the mobile communication device itself, so that the retractable headset system 10 will be integrated into the mobile device, or is designed as a separate accessory-like encasement like shown in the example of figure 1. When carried out as a separate device, the encasement 11 is adapted to be attached to a mobile communication device. A lock mechanism 17 may be provided on the accessory encasement 11 to enable a secure attachment of the two encasements and to allow detaching them.

When the retractable headset is carried out as an additional accessory for a mobile communication device, the audio signals are transmitted between the headset and mobile device either by means of a mechanical plug-in connection or a transceiver means which allows the headset accessory to be operated remotely. The plug-in connector may be adapted for an automatic connection, when the headset accessory is attached to the body of the mobile communication device and may also provide a cable when both devices are operated in a detached configuration. For the later option, a transceiver based on the transmission of optical or electro-magnetical signals is preferred. But the transceiver based transmission of audio signals is also possible for the accessory attached to the mobile device. Preferably, the transceiver based option for transmitting audio signals is used in the remote mode while the plug-in connector based option is used in the attached mode.

A retracting mechanism for controlling the retractation of the cord 18 and thereby the retractation of the headset itself is formed by a pulling device 15 and, if necessary an additional control element 16. The retracting device 15 is able to retract a pulled out headset back into the encasement such that the speaker 12 and microphone 13 are placed into their respective recesses.

The pulling device 15 may either be operated manually or by a mechanical or electro-mechanical actuation. In the example of Fig. 1 the pulling device 15 is formed by a reel around which the cord 18 is wound up when retracted in the headset. When the headset is pulled from the encasement, the cord 18 is unwound from the reel 15. This can be used to wind up a spring loaded mechanical actuation in the reel which will thus later be able to rewind the reel when the headset has to be retracted back in the encasement 11. Alternatively, an electric motor drive can be used to drive the reel in both directions.

The control element 16 prevents the headset from being pulled out or retracted unintendedly. With the pulling device 15 being carried out for manual operation or with a mechanical actuation, the control element 16 is preferably formed by a clamping device or the like fixing the cord 18 in a current position when no external withdrawing force is applied to it. By pressing on the surface of the control element 16 which is accessible at the surface of the encasement , the clamping mechanism can be released and the headset is retracted into its encasement 11. When a electric motor drive is used to actuate the pulling device 15, the control element 16 can simply be a switch allowing to select if the
the headset has to be withdrawn from the encasement or retracted into it. Preferably a combination of a clamping device and an electrical switch is used, whereby the electromotor may assist automatically, when a user pulls the headset from its encasement.

A detector 14 checks if the headset is pulled from the encasement or retracted in the encasement. The position of the headset can either be identified by locating the position of an element of the headset 12 or 13, by identifying the position of a marker on the cord 18 or when using a wheel 15 as in the example of Fig. 1 by identifying the rotational position of the wheel.

Using a reel as a pulling device 15 is just one of many possibilities. The cord may alternatively be guided between two rolls and loosely stored in the encasement 11, or a guide rail may be used to retract and store the cord in the encasement. But also any other retraction and storing mechanisms like e.g. a folding mechanism or the like may be used.

A detector 14 is used to confirm the state of retraction of the headset. There are three main states of interest, namely the headset just going to be retracted and the headset being retracted completely in the encasement, and the headset being partly or completely pulled from the encasement 11. A headset being completely retracted in the encasement means, that the cord 18 of the headset is retracted to its limit and cannot be retracted in the encasement any further. Thereby, the electroacoustic transducers 12 and 13 not necessarily have to be pulled inside the encasement or a recession thereof.

As a detector, mechanical switches, preferably micro-switches, electro-optical devices, proximity switches, sensing devices identifying an electrical characteristic of an electric motor drive like turning clock-/unclock-wise or being in an end position or the like can be used.

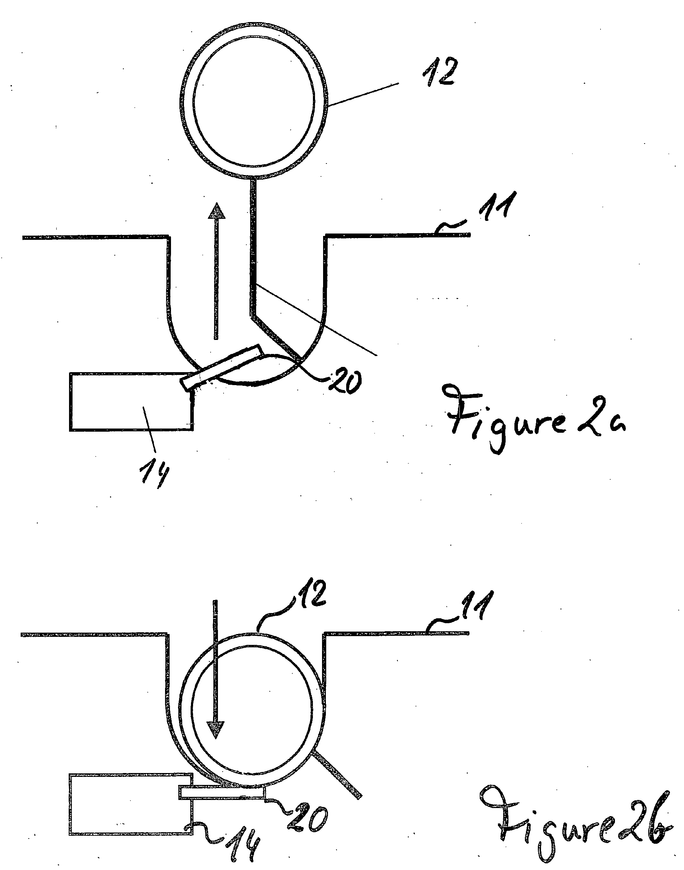

The example of Fig. 1 uses a micro switch 16 to sense if the speaker 12 of the headset is in its position of rest in the respective recess. This shown in more detail in Fig. 2a and Fig. 2b. The micro switch 14 comprises a switch lever 20 which can be moved between two final positions. In a first of the final positions, the micro switch provides an electrical connection between a first pair of its leads, in a second final position it provides an electrical connection between a second pair of its leads and/or an open circuit between the first pair of leads. These switching states are used to control functions of the mobile communication device. When no force is applied to the switch lever, it automatically returns to a defined final position, the release position.

In Fig. 2a the speaker 12 is removed from its recess so that the switch lever 20 takes in the release position. Its switching state hereby indicates to the mobile communication device that the headset is not completely retracted. In Fig. 2b with the speaker 12 completely retracted in its recess, the switch lever 20 is moved to or close to the second final position different from the release position thereby indicating to the mobile communication the headset being retracted completely.

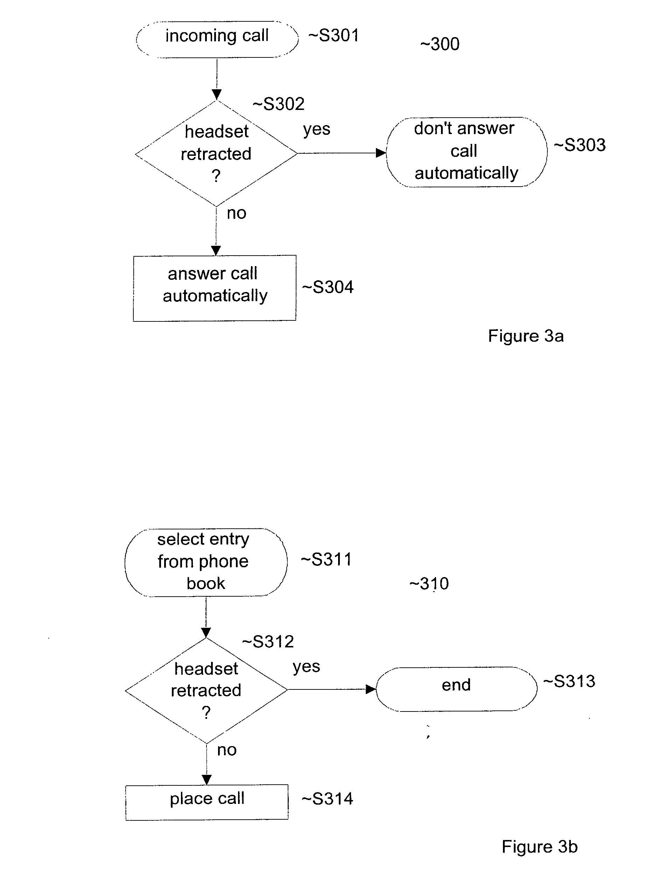

How a switching state of the micro switch 14 or a state of any other detector 14 like mentioned above can control functions of the mobile communication device is illustrated by means of examples illustrated in the representations of Figures 3a to 3d. It is to be noted that the micro switch 14 is just one example for a detector suited for identifying the retraction state of the headset. Also the motion of the cord 18, the direction of its motion, the tension force exerted to it or the like may be identified by suitable detectors resulting in a control state adapted to control functions of the mobile communication device.

The first scenario 300 underlying the flowchart of Fig. 3a refers to the reaction of a mobile communication device to an incoming call. When the mobile device receives a call in step S301, it starts to query if the headset is in a retracted position in step S302, whereby in the following, the term 'retracted position' is used as a synonym for the cord 18 going to be retracted as well as for the cord 18 being retracted to its limit into the encasement 11. This can be achieved by e.g. querying the switching state of a micro switch like the one described above or by evaluating a signal related to a state of a respective detector 14. If the headset is pulled from the encasement 11, the mobile communication device answers the call automatically in step S 304, else it does not take any action in step S303 or sends a message to the effect that the callee is currently not available. As long as the line is not interrupted, the user may pull the headset from the encasement 11 to hop from step S303 to step S304.

In the second scenario 310 shown in Fig. 3b, a user selects an entry from the phone book facility on his mobile communication device in step S311. In the phone book facility telephone numbers are usually associated with a respective specification. Again the mobile device queries the status of the headset like described for the first scenario in step S312. If the headset is pulled out from the encasement 11, the mobile device places the call according to the selected entry automatically in step S314, else it take no respective action in step S313.

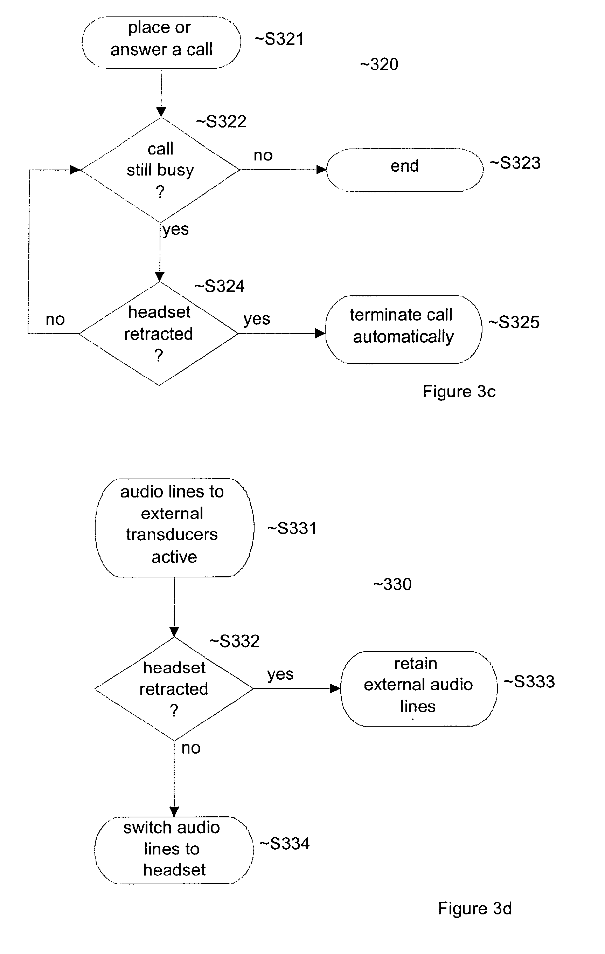

The third scenario 320 represented by Fig. 3c assists a user in terminating a call. Starting in step S321 by the user either placing or answering a call, the status of the call is first queried in step S322. When the call is found to be terminated, e.g. when the opposite participant hung up, the mobile communication device returns to its stand by status in step S323. Else, the status of the headset is checked in step S324. If it is found to be pulled from the encasement 11, the system return to step S322. If the headset has been retracted meanwhile, the call is terminated automatically by the mobile communication device.

The last scenario 330 as shown in Fig. 3d shows how a mobile communication device according to the present invention assists a user to use audio facilities like speaker and microphone of the mobile communication device or those of an external appliance alternatively to the retractable headset. In step S331 it is assumed that the audio lines of an external appliance or the speaker and microphone internal to the mobile device are used instead of the headset. Whenever the audio channels of the mobile device are active, the device queries in step S332 if the headset is in its retracted position. As long as this is found to be true, the system will retain the currently used audio lines in step S333. Else, when the headset is being pulled from the encasement 11, the audio channels will be switched to the audio lines of the headset in step S334.

The sequence of operation works also reversely, although not explicitly shown in Fig. 3d: When the headset is used, the audio channels will be switched to it until it is retracted in the encasement 11. Upon this, the other audio lines will be activated instead.

A mobile communication device used with a retractable headset according to the present invention allows a user to enjoy mobile communication without being distracted in his concentration from occurrences relevant to security.

## Claims

1. Mobile communication device with a headset kit (10), wherein the headset (12, 13, 18) is an integral part of the mobile communication device or an integral part of an accessory device adapted to transfer signals between the headset and the mobile communication device, and wherein the headset (12, 13, 18) is connected to the encasement (11) of the respective device,
**characterised by**
a retracting means (15 16) for actively retracting at least the cord (18) of the headset (12, 13, 18) into the encasement (11).

2. Mobile communication device according to claim 1,
**characterised by**
said retracting means (15, 16) being carried out as a mechanical mechanism.

3. Mobile communication device according to claim 1,
**characterised by**
said retracting means (15, 16) being carried out as an electro-mechanical mechanism.

4. Mobile communication device according to claim 1, 2 or 3,
**characterised in**
**that** an operating status of the mobile communication device is controlled by the state of retraction of the headset (12, 13, 18).

5. Mobile communication device according to claim 4,
**characterised in**
**that** with the cord (18) of the headset (12, 13, 18) being at least partly pulled from the encasement (11), the mobile device automatically answers an incoming call.

6. Mobile communication device according to claim 4 or 5,
**characterised in**
**that** with the cord (18) of the headset (12, 13, 18) being at least partly pulled from the encasement (11), the mobile device automatically places a call according to number entered by a user.

7. Mobile communication device according to claim 4, 5 or 6,
**characterised in**
**that** with the cord (18) of the headset (12, 13, 18) being at least partly pulled from the encasement (11), the mobile device automatically places a call according to an entry selected by a user from a phone book means on the mobile communication device.

8. Mobile communication device according to one of the claims 4 to 7,
**characterised in**
**that** a current call is terminated upon the cord (18) of the headset going to be retracted in the encasement (11) or being retracted to its limit into the encasement (11).

9. Mobile communication device according to one of the claims 4 to 8,
**characterised in**
**that** electroacoustic transducers which are accessible by the mobile communication device and which are different from the headset (12, 13, 18) are utilised by the mobile communication device when the cord (18) of the headset (12, 13, 18) is going to be retracted in the encasement (11) or is retracted to its limit into the encasement (11), and said electroacoustic transducers are not utilised by the mobile communication device when the cord (18) of the headset (12, 13, 18) is at least partly pulled from the encasement (11).

10. Accessory device for a mobile communication device with a headset (12, 13, 18) connected to the encasement (11) of the accessory device, and with a signal transmission means for the transfer of signals between the headset (12, 13, 18) and the mobile communication device,
**characterised by**
a retracting means (15, 16) for actively retracting at least the cord (18) of the headset (12, 13, 18) into the encasement (11).

11. Accessory device according to claim 10,
**characterised in**
**that** the accessory device is releasably attachable to the mobile communication device.

12. Accessory device according to claim 10 or 11,
**characterised in**
**that** said signal transmission means is formed by a plug-in connector.

13. Accessory device according to claim 10, 11 or 12,
**characterised in**
**that** said signal transmission means is formed by a transceiving means for a transmission and a reception of optical or electro-magnetical signals.
